# EUROPÄISCHE PATENTSCHRIFT

(11) **EP 0 702 136 B1**
(45) Veröffentlichungstag und Bekanntmachung des Hinweises auf die Patenterteilung: **19.12.2001**
(21) Anmeldenummer: 95112251.4
(22) Anmeldetag: 04.08.1995
(51) Int. Cl.: F02D 41/08

(54) **Verfahren und Vorrichtung zur Leerlaufeinstellung einer Brennkraftmaschine**
Method and apparatus for adjusting the idling speed of a combustion engine
Méthode et dispositif pour ajuster le ralenti d'un moteur à combustion

(30) Priorität: 19.09.1994 DE 4433299
(43) Veröffentlichungstag der Anmeldung: 20.03.1996
(73) Patentinhaber: ROBERT BOSCH GMBH, 70442 Stuttgart (DE)
(72) Erfinder: Nusser, Claus-Dieter, D-71701 Schwieberdingen (DE); Henkelmann, Peter, D-74372 Sersheim (DE); Lischwe, Markus, Dipl.-Ing., D-56745 Rieden (DE)

(56) Entgegenhaltungen:
- US-A- 4 345 557
- US-A- 4 402 289
- US-A- 4 716 871
- US-A- 5 002 026
- US-A- 5 092 297

## Beschreibung

### Stand der Technik

Die Erfindung betrifft ein Verfahren und eine Vorrichtung zur Leerlaufeinstellung einer Brennkraftmaschine.

Wird eine Brennkraftmaschine eine längere Zeit im Vollastbereich betrieben und dann in den Leerlaufbereich abgebremst, besteht die Gefahr, daß die Brennkraftmaschine sich überhitzt, wenn die üblicherweise eingestellte Leerlaufdrehzahl unverändert beibehalten wird. Insbesondere tritt infolge der dann herrschenden großen Öltemperaturen ein zu geringer Öldruck auf, um eine ausreichende Schmierung des Motors zuu gewährleisten.

Zur Vermeidung dieser und ähnlicher ungewollter Situationen ist aus der DE 30 20 494 A1 bekannt, die Leerlaufeinstellung einer Brennkraftmaschine im Rahmen einer Leerlaufdrehzahlregelung durchzuführen und deren Sollwert derart von der Motor- bzw. Kühlmitteltemperatur der Brennkraftmaschine abhängig vorzugeben, daß oberhalb einer vorbestimmten Motor- bzw. Kühlmitteltemperatur, im sogenannten Heißleerlauf, die Drehzahl erhöht ist. Dadurch wird die Kühlwirkung verstärkt.

Aus der DE 40 16 099 A1 ist bekannt, zur Leerlaufeinstellung im normalen Betriebsbereich die Öltemperatur heranzuziehen. Um einen Öltemperatursensor einzusparen, wird die Öltemperatur aus anderen Größern bestimmt. Zu diesem Zweck wird die Zeitspanne bestimmt, während derer die Kühlmitteltemperatur gleich oder größer als eine Temperaturschwelle ist. Durch eine vorgegebene Beziehung zwischen dieser Zeitspanne und der Öltemperatur wird ein Maß für die Öltemperatur bestimmt und die Leerlaufdrehzahl entsprechend eingestellt. Maßnahmen, welche in Verbindung mit dem sogenannten Heißleerlauf das drohende Absinken des Öldrucks feststellen, werden nicht beschrieben.

Es ist daher Aufgabe der Erfindung, Maßnahmen anzugeben, welche es ermöglichen, die Leerlaufdrehzahl zu erhöhen, wenn der Betriebszustand des sogenannten Heißleerlaufs erreicht ist, in dem ein geringer Öldruck aufzutreten droht.

Die wird durch die Merkmale der unabhängigen Patentansprüche erreicht.

### Vorteile der Erfindung

Durch die erfindungsgemäße Vorgehensweise kann der Betriebszustand Heißleerlauf zufriedenstellend beherrscht werden. Dabei ermöglicht die erfindungsgemäße Vorgehensweise eine Erhöhung der Leerlaufdrehzahl, wenn der Öldruck zu gering zu werden droht. Besonders vorteilhaft ist, daß die erfindungsgemäße Vorgehensweise die Überschreitung einer Öltemperaturschwelle erkennen läßt, oberhalb derer ein zu geringer Öldruck aufzutreten droht, ohne daß ein Öltemperatursensor verwendet wird.

Für den Anstieg der Öltemperatur ist die Zeit, die der Motor mit hohen Drehzahlen bzw. mit hohen Lasten betrieben wird, wesentlich. Dabei wird in vorteilhafter Weise das Überschreiten der Öltemperaturschwelle auf der Basis einer aus Drehzahl und Motorlast gebildeten Zeitspanne, gegebenenfalls der Motortemperatur und/oder der Ansauglufttemperatur abgeschätzt.

Besonders vorteilhaft ist es, bei der Bestimmung dieser Zeitspanne die Zeit, für die der Motor mit einer Drehzahl oberhalb einer Grenzdrehzahl bzw. oberhalb einer Grenzlast betrieben wird, heranzuziehen. Dabei ist vorteilhaft, die Zeit zu berücksichtigen, für die der Motor mit einer Drehzahl unterhalb einer Grenzdrehzahl bzw. unterhalb einer Grenzlast betrieben wird.

Vorteilhaft ist, daß durch die Berücksichtigung des Lastzustands des Motors alle in der Praxis vorkommenden Betriebszustände, auch Paßfahrten, Anhängerbetrieb, etc. sicher abgedeckt werden.

Weitere Vorteile ergeben sich aus der nachfolgenden Beschreibung eines Ausführungsbeispiels sowie aus den abhängigen Ansprüchen.

### Zeichnung

Die Erfindung wird nachstehend anhand der in der Zeichnung dargestellten Ausführungsformen näher erläutert. Dabei zeigt Figur 1 und 2 ein erstes Ausführungsbeispiel anhand eines Übersichtsblockschaltbilds und eines Flußdiagramms, während in den Figuren 3 und 4 bzw. 5 und 6 ein zweites bzw. drittes Ausführungsbeispiel als Übersichtsblockschaltbild und Flußdiagramm dargestellt ist. Die Flußdiagramme skizzieren dabei Realisierungen der erfindungsgemäßen Vorgehensweise als Rechenprogramme.

### Beschreibung von Ausführungsbeispielen

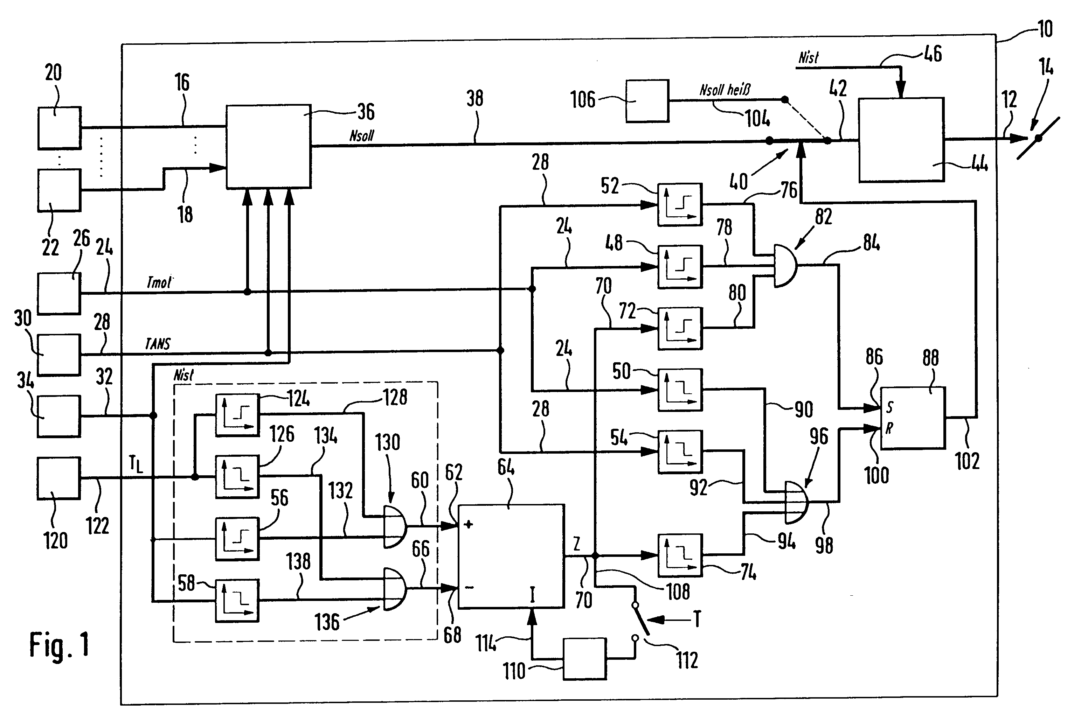

Figur 1 zeigt eine Steuereinheit 10, die über eine Ausgangsleitung 12 neben anderen, aus Übersichtlichkeitsgründen nicht dargestellten Funktionen wie Kraftstoffzumessung und Zündungseinstellung ein zumindest die Leerlaufluft zur Brennkraftmaschine einstellendes Stellelement 14 betätigt. Die Steuereinheit 10 ist über die Eingangsleitungen 16 bis 18 mit Meßeinrichtungen 20 bis 22 zur Erfassung von Betriebsgrößen von Brennkraftmaschine und/oder Fahrzeug, über die Eingangsleitung 24 mit einer Meßeinrichtung 26 zur Erfassung der Motortemperatur (Kühlwassertemperatur), über eine Leitung 28 mit einer Meßeinrichtung 30 zur Erfassung der Ansauglufttemperatur und über eine Leitung 32 mit einer Meßeinrichtung 34 zur Erfassung der Motordrehzahl verbunden. Die Eingangsleitungen 16 bis 18 führen auf eine Sollwertbildungseinheit 36, deren Ausgangsleitung 38 auf ein Schaltelement 40 führt. In einem vorteilhaften Ausführungsbeispiel führt wenigstens eine der Leitungen 24, 28 und 32 ebenfalls zur Einheit 36. Vom Schaltelement 40 führt eine Leitung 42 zu einer Reglereinheit 44, welcher über eine Leitung 46 die Motordrehzahl zugeführt wird. Ausgangsleitung der Reglereinheit 44 ist die Leitung 12. Die Leitung 24 führt einerseits zu einer Schwellwertstufe 48, andererseits zu einer weiteren Schwellwertstufe 50. Ebenso führt die Leitung 28 zum einen zu einer Schwellwertstufe 52, zum anderen zu einer Schwellwertstufe 54, die Leitung 32 zu einer Schwellwertstufe 56 und zu einer Schwellwertstufe 58. Die Ausgangsleitung 132 der Schwellwertstufe 56 führt auf ein ODER-Gatter 130, dessen Ausgangsleitung 60 auf den inkrementierenden Eingang 62 eines Zählmittels 64 führt. Analog führt die Ausgangsleitung 138 der Schwellwertstufe 58 auf ein ODER-Gatter 136, dessen Ausgangsleitung 66 auf den dekrementierenden Eingang 68 des Zählmittels 64 führt. Die Ausgangsleitung 70 des Zählmittels 64 führt einerseits zu einer Schwellwertstufe 72, andererseits zu einer weiteren Schwellwertstufe 74. Die Ausgangsleitung 76 der Schwellwertstufe 52, die Ausgangsleitung 78 der Schwellwertstufe 48 und die Ausgangsleitung 80 der Schwellwertstufe 72 führen auf ein logisches UND-Gatter 82, dessen Ausgangsleitung 84 auf den Setzeingang 86 eines eine Flip-Flop-Funktion darstellenden Elements 88 geführt ist. Die Ausgangsleitung 90 der Schwellwertstufe 50, die Ausgangsleitung 92 der Schwellwertstufe 54 sowie die Ausgangsleitung 94 der Schwellwertstufe 74 führen auf ein logisches ODER-Gatter 96, dessen Ausgangsleitung 98 auf den Rücksetzeingang 100 des Elements 88 geführt ist. Die Ausgangsleitung 102 des Elements 88 führt auf das Schaltmittel 40. In seiner zweiten Schaltposition (strichliert dargestellt) verbindet dieses die Leitung 42 mit einer Leitung 104, welche von einem Speicherelement 106 zur Speicherung der Solleerlaufdrehzahl Nsollheiß im Heißleerlaufzustand ausgeht. Ferner geht von der Leitung 70 eine Leitung 108 zu einem Speicherelement 110, in dem der Ausgangswert des Zählmittels 64 zu vorgegebenen Zeitpunkten (symbolisiert durch das Schaltmittel 112) gespeichert wird. Bei Einschalten der Zündung wird dieser dauerhaft gespeicherte Wert über die Leitung 114 in Zählmittel 64 geladen.

Ferner ist eine Meßeinrichtung 120 vorgesehen, welche ein Maß für die Motorlast erfaßt. Dabei kann es sich um ein Meßelement zu Erfassung der der Brennkraftmaschine zugeführten Luftmasse oder -menge, des im Ansaugsystem herrschenden Saugrohrdrucks oder der Stellung der Drosselklappe handeln. Ferner kann in vorteilhafter Weise anstelle der Meßeinrichtung 120 die Erfassung des in der Steuereinheit 10 in Abhängigkeit von Motordrehzahl und wenigstens einer der obigen Größen gebildeten Lastsignals (Grundeinspritzzeit) TL vorgesehen sein. Von der Meßeinrichtung 120 geht eine Leitung 122 zu einer ersten Schwellwertstufe 124 sowie zu einer zweiten Schwellwertstufe 126. Die Ausgangsleitung 128 der Schwellwertstufe 124 führt auf das ODER-Gatter 130, die Ausgangsleitung 134 der Schwellwertstufe 126 auf das ODER-Gatter 136.

Im Normalbetrieb der in Figur 1 dargestellten Steuervorrichtung bildet die Sollwertbildungseinheit 36 abhängig von den zugeführten Betriebsgrößen wie Getriebestellung, Batteriespannung, etc. sowie Betriebsgrößen wie Motordrehzahl, Kühlwassertemperatur und Ansauglufttemperatur einen Leerlaufdrehzahlsollwert NSoll, welcher von der Reglereinheit, beispielsweise einem PID-Regler, unter Vergleich mit der Istdrehzahl durch Betätigen des Stellelements 14 eingestellt wird. Im sogenannten Heißleerlauf wird das Schaltmittel 40 unter nachfolgend beschriebenen Bedingungen in die strichliert dargestellte Position geschaltet und die Leerlaufdrehzahl auf der Basis des für diesen Betriebszustand vorgesehenen Sollwertes eingestellt.

Die Umschaltung auf den gegenüber dem Drehzahlsollwert im Normalbetrieb betragsmäßig höheren Sollwert im Heißleerlauf erfolgt dann, wenn ein Absinken des Öldrucks auf niedrige Werte droht. Dies wird erkannt, wenn ein Ansteigen der Öltemperatur über einen Schwellwert berechnet wird. Im in Figur 1 dargestellten erten Ausführungsbeispiel wird das Umschaltsignal dann gebildet, wenn der Motor für eine vorgegebene Zeit mit einer Drehzahl oberhalb einer Grenzdrehzahl und/oder in einem hohen Lastzustand (Lastmeßwert oberhalb eines Grenzwertes) betrieben wird, ergänzend die Motortemperatur und ggf. die Ansauglufttemperatur oberhalb vorgegebener Grenzwerte liegen. Dabei werden in einer bevorzugten Ausführung die Zeiten, die der Motor unterhalb der Grenzdrehzahl und/oder unterhalb der Lastgrenze betrieben wird, mit berücksichtigt und so als ergänzendes Kriterium die Abkühlung des Öls herangezogen.

Wenn die Steuereinheit 10 erstmalig nach Unterbrechung der Stromversorgung in Betrieb genommen wird (sogenannter Urstart), wird das Zählmittel 64 initialisiert, vorzugsweise auf den Wert 0 gesetzt. Überschreitet die Istdrehzahl den in der Schwellwertstufe 56 vorgegebenen Grenzwert (z.B. 4800 Umdrehungen pro Minute), wird der Zählwert des Zählmittels in regelmäßigen Zeitabständen, z.B. 10 Sekunden, inkrementiert, vorzugsweise um 1 erhöht. Unterschreitet die Istdrehzahl den in der Schwellwertstufe 58 vorgegebenen Grenzwert, der vorzugsweise mit dem in der Schwellwertstufe 56 vorgegebenen Grenzwert identisch ist, so wird der Zählwert des Zählmittels 64 in regelmäßigen Zeitabständen, z.B. 10 Sekunden, dekrementiert, vorzugsweise um 1 erniedrigt. Gleichzeitig ist in den Schwellwertstufen 124 und 126 ein Lastgrenzwert vorgegeben, der beispielsweise 70 % der Maximallast (100 %) beträgt. Überschreitet die Last diesen Schwellwert, so wird das Zählmittel 64 ebenfalls in vorgegebenen Zeitabständen inkrementiert, unterschreitet die Motorlast diesen Grenzwert, so wird das Zählmittel 64 dekrementiert. Der so gebildete Zählwert Z wird über die Leitung 70 abgegeben und zu vorbestimmten Zeitpunkten dauerhaft im Speicherelement 110 gespeichert. Bei einem Normalstart der Brennkraftmaschine wird der im Speicherelement 110 dauerhaft gespeicherte Zählwert in das Zählmittel 64 geladen. Es wird also immer vom gespeicherten Zählwert ausgegangen. Der Zählwert Z ist ein Maß für eine von der Motordrehzahl und der Motorlast abhängige Zeitdauer. Die Zeitdauer wird ermittelt aus der Zeit, für die die Drehzahl und/oder die Last vorbestimmte Schwellwerte überschritten haben, vermindert um die Zeit, für die die Maschine unterhalb der Grenzwerte betrieben wird. Sie stellt ein Maß dar für die Zeit, für die der Motor mit hoher Last und/oder Drehzahl betrieben wird. Zu beachten dabei ist, daß der Zählwert auf einen Minimal- und Maximalwert begrenzt ist.

In den Schwellwertstufen 48, 52 und 72 werden die zugeführten Werte der Kühlwassertemperatur Tmot, der Ansauglufttemperatur TANS sowie des Zählwerts Z mit vorgegebenen Schwellwerten verglichen und bei Überschreiten des jeweiligen Schwellwerts über die Leitungen 76, 78 und 80 ein entsprechendes Signal abgegeben. Überschreiten alle drei Betriebsgrößen den jeweils vorgegebenen Schwellwert, erzeugt das logische UND-Gatter 82 ein entsprechendes, das Element 88 setzendes Signal über die Leitung 84. Entsprechend ändert das Element 88 sein Ausgangssignalpegel auf der Leitung 102 und führt zur Umschaltung des Schaltmittels 40. Der Betriebszustand Heißleerlauf wird also erkannt, wenn die Motortemperatur, die Ansauglufttemperatur vorbestimmte Schwellwerte überschreiten sowie die Drehzahl und/oder die Last für eine bestimmte Zeitdauer oberhalb von Schwellwerten lagen. Mit anderen Worten wird die Zeitdauer, für die die Drehzahl und/oder die Last oberhalb der Grenzwerte lagen, mit einer Schwelle verglichen, die abhängig von der Geschichte der zeitlichen Drehzahl- und Lastverläufe ist. Beispiele für die Grenzwerte in einem Ausführungsbeispiele sind 4800 Umdr/min für die Drehzahl, 100°C für die Motor-, 60°C für die Ansauglufttemperatur und 70% für die Motorlast. Der Grenzzählwert wird beispielsweise bei ständig hoher Drehzahl oder Last nach 15 min, bei hoher Drehzahl und hoher Last nach 7.5 min erreicht.

Es ist zu erwähnen, daß ein Setzen des Betriebszustandes Heißleerlauf nur außerhalb der Startphasen vorgenommen werden kann. Das Element 88 wird mit jedem Start der Brennkraftmaschine zurückgesetzt, um einen definierten Ausgangspunkt zu schaffen.

Unterschreiten die dargestellten Betriebsgrößen Kühlwassertemperatur, Ansauglufttemperatur und Zählwert, die in den Schwellwertstufen 50, 54 und 74 vorgegebenen Schwellwerte, erzeugt die jeweilige Schwellwertstufe ein entsprechende Signalpegel auf den Leitungen 90, 92 und 94. Das logische ODER-Gatter 96 erzeugt dann ein Ausgangssignal auf der Leitung 98, welches zum Rücksetzen des Elements 88 und zum Schalten des Schaltmittels 40 in die durchgezogene Stellung führt, wenn wenigstens eines der angegebenen Betriebsgrößen den vorgegebenen Schwellwert unterschreitet. Dann wird der Betriebszustandheißleerlauf als beendet erkannt

Neben der in Figur 1 dargestellten Ausführungsform kann der Fachmann die erfindungsgemäße Vorgehensweise auch mit anderen Schaltelementen realisieren und die gewünschte Funktion erlangen. Ferner ist in vorteilhafter Weise in einem Ausführungsbeispiel vorgesehen, daß bei Über- bzw. Unterschreiten der Grenzwerte durch die Drehzahl und Last nur einmal in- bzw. dekrementiert wird im Gegensatz zur oben dargestellten Ausführung, bei der in diesem Fall zweimal in- bzw. dekrementiert wird.

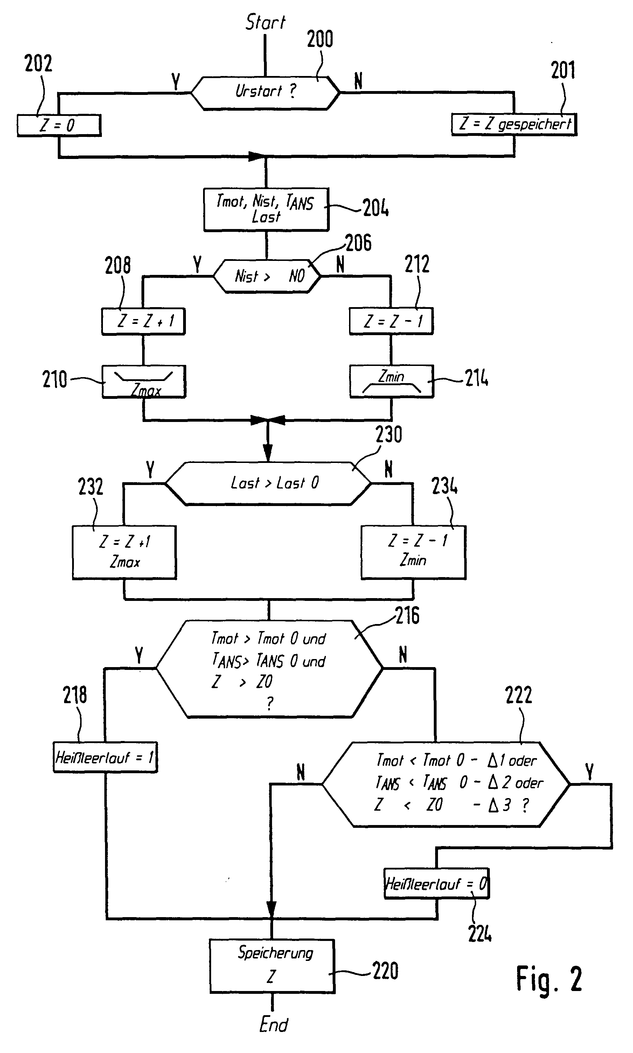

Figur 2 zeigt ein Flußdiagramm als Realisierungsbeispiel der dargestellten Ausführungsform im Rahmen eines Rechnerprogramms. Der im Flußdiagramm dargestellte Programmteil wird dabei zu vorgegebenen Zeitpunkten, beispielsweise alle 10 Sekunden, aufgerufen. Nach Start des Programmteils gemäß Figur 2 wird in einem ersten Schritt 200 anhand einer Marke abgefragt, ob eine Urstartbedingung vorliegt. Ist dies der Fall, wird gemäß Schritt 202 der Zählerwert Z auf 0 gesetzt. Liegt keine Urstartbedingung vor, wird der abgespeicherte Zählerwert Z im Schritt 201 geladen. Nach Schritt 201 oder 202 wird im Schritt 204 die Kühlwassertemperatur Tmot, die Motordrehzahl Nist, die Ansauglufttemperatur TANS sowie ein die Last repräsentierender Meßwert LAST eingelesen und im darauffolgenden Abfrageschritt 206 abgefragt, ob die Istmotordrehzahl einen vorgegebenen Schwellwert N0 überschritten hat. Ist dies der Fall, wird im Schritt 208 der Zähler inkrementiert, das heißt um 1 erhöht, und ggf. im darauffolgenden Schritt 210 auf seinen Maximalwert Zmax begrenzt. Ist die Motordrehzahl gleich oder kleiner als der vorgegebene Schwellwert N0, wird im Schritt 212 der Zähler dekrementiert, das heißt der Zählwert Z um 1 erniedrigt und im darauffolgenden Schritt 214 ggf. auf den Minimalwert Zmin begrenzt. Danach wird im Abfrageschritt 230 überprüft, ob der Lastmeßwert einen vorgegebenen Grenzwert LAST0 überschritten hat. Ist dies der Fall, wird im Schritt 232 der Zähler Z inkrementiert und ggf. auf seinen Maximalwert begrenzt. Im gegenteiligen Fall wird gemäß Schritt 234 der Zähler dekrementiert und ggf. auf seinen Minimalwert begrenzt. Danach wird im Abfrageschritt 216 überprüft, ob die Kühlwassertemperatur einen Schwellwert Tmot0 überschritten hat, die Ansauglufttemperatur einen Schwellwert TANS0 überschritten hat und der Zählerwert größer als ein Zählerschwellwert ZO ist. Liegen alle diese Bedingungen gleichzeitig vor, so wird im Schritt 218 eine Marke für den Betriebszustand des Heißleerlaufs gesetzt. Dies führt im Programm der Leerlaufdrehzahlregelung dazu, daß der Leerlaufdrehzahlsollwert NSoll durch den für diesen Betriebszustand vorgegebenen Sollwert NSollheiß ersetzt wird. Nach dem Schritt 218 wird im Schritt 220 der vorliegende Zählerwert dauerhaft gespeichert und der Programmteil beendet. Wird im Schritt 216 festgestellt, daß die drei Bedingungen nicht gleichzeitig vorliegen, so wird im Abfrageschritt 222 überprüft, ob die Kühlwassertemperatur kleiner als ein Schwellwert (Tmot 0 - deltal) oder die Ansauglufttemperatur kleiner als ein Schwellwert (TANS0 - delta2) oder der Zählwert Z kleiner als ein vorgegebener Schwellwert (Z0 - delta3) ist. Ist dies nicht der Fall, hat sich am aktuellen Betriebszustand der Brennkraftmaschine nichts geändert, so daß mit Schritt 220 und der Speicherung des Zählwerts Z fortgefahren wird. Ist eine der im Schritt 222 überprüften Bedingungen erfüllt, so wird im Schritt 224 das Verlassen des Betriebszutandes Heißleerlauf bzw. der Normalbetriebszstand der Leerlaufregelung erkannt und die Heißleerlaufmarke entsprechend verändert bzw. auf ihrem bisherigen Wert gehalten. Dies führt im Programm der Leerlaufdrehzahlregelung dazu, daß der von Betriebsgrößen abhängige Leerlaufdrehzahlsollwert NSoll der Regelung zugrundegelegt wird. Nach Schritt 224 wird der Zählwert gespeichert und der Programmteil beendet.

Entsprechend diesem Ausführungsbeispiel wird der Betriebszustand Heißleerlauf abhängig von Drehzahl, Last, Motortemperatur und Ansuaglufttemperatur als erreicht bzw. als verlassen erkannt. Der Betriebszustand Heißleerlauf liegt vor, wenn die Motortemperatur und die Ansauglufttemperatur und eine Zeitdauer, für die die Drehzahl und/oder die Last oberhalb vorgegebener Grenzwerte sich befanden, jeweils vorgegebene Schwellwerte überschreiten. Dabei wird jeweils die Zeitdauer mitberücksichtigt, für die die Drehzahl und/oder die Last sich unterhalb dieser Grenzwerte befanden. Der Betriebszustand Heißleerlauf wird nicht erkannt bzw. als verlassen angesehen, wenn die Motortemperatur oder die Ansauglufttemperatur oder diese Zeitdauer unterhalb vorgegebener Schwellwerte liegen.

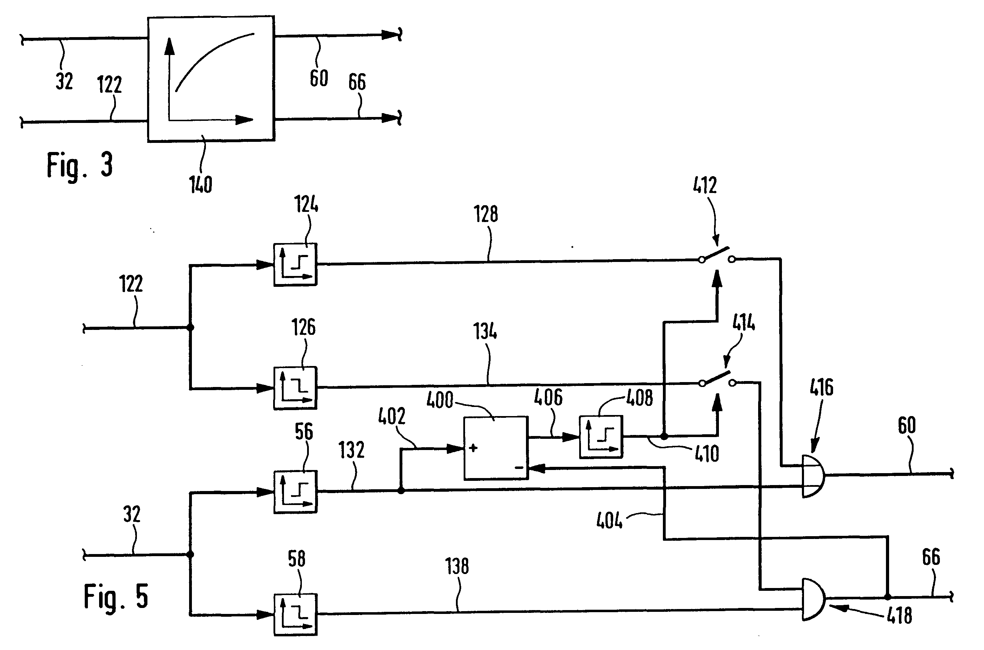

In einem alternativen, bevorzugten Ausführungsbeispiel ist der in Figur 1 strichliert umrandete Teil (Stufen 56, 58, 124 und 126 sowie ODER-Gatter 130 und 136) durch die in Figur 3 dargestellte Lösung ersetzt. Nach Figur 3 ist ein Element 140 vorgesehen, dem über die Leitung 32 von der Meßeinrichtung 34 die Drehzahl und über die Leitung 122 von der Meßeinrichtung 120 ein Maß für die Motorlast zugeführt ist. Das Element 140 enthält eine Drehzahl-Last-Grenzkennlinie oder -tabelle, z.B. eine Kennlinie von Lastgrenzwerten über der Drehzahl oder von Drehzahlgrenzwerten über der Last. Vom Element 140 führt die Ausgangsleitung 60 zum inkrementierenden Eingang 62 des Zählmittels 64, während die Leitung 66 zum dekrementierenden Eingang 68 führt. Ein Überschreiten der Kennlinien- bzw. -tabellenwerte durch die zugeführten Meßwerte führt zu einem Inkrementieren, deren Unterschreiten zu einem Dekrementieren des Zählmittels 64. Im Element 140 wird anhand der zugeführten Meßwerte der gemessenen Drehzahl ein Lastgrenzwert zugeordnet und dieser Lastgrenzwert mit der aktuell eingelesenen Last verglichen. Das Überschreiten des Grenzwertes führt zur Inkrementierung, das Unterschreiten zur Dekrementierung des Zählmittels. Alternativ kann anhand des Lastmeßsignals ein Grenzdrehzahlwert aus der gespeicherten Kennlinie ausgelesen werden, dessen Überschreiten zur Inkrementierung, dessen Untrschreiten zur Dekrementierung des Zählmittels 64 führt. Der Zählwert Z repräsentiert in diesem Ausführungsbeispiel demnach die Zeitdauer, für die die Brennkraftmaschine in einem Betriebspunkt mit hoher Drehzahl oder unter hoher Last betrieben wird, wobei die Zeitdauer, für die die Brennkraftmaschine in Betriebspunkten mit niedrigeren Drehzahlen oder niedrigerer Last betrieben wird, durch Subtraktion berücksichtigt sind.

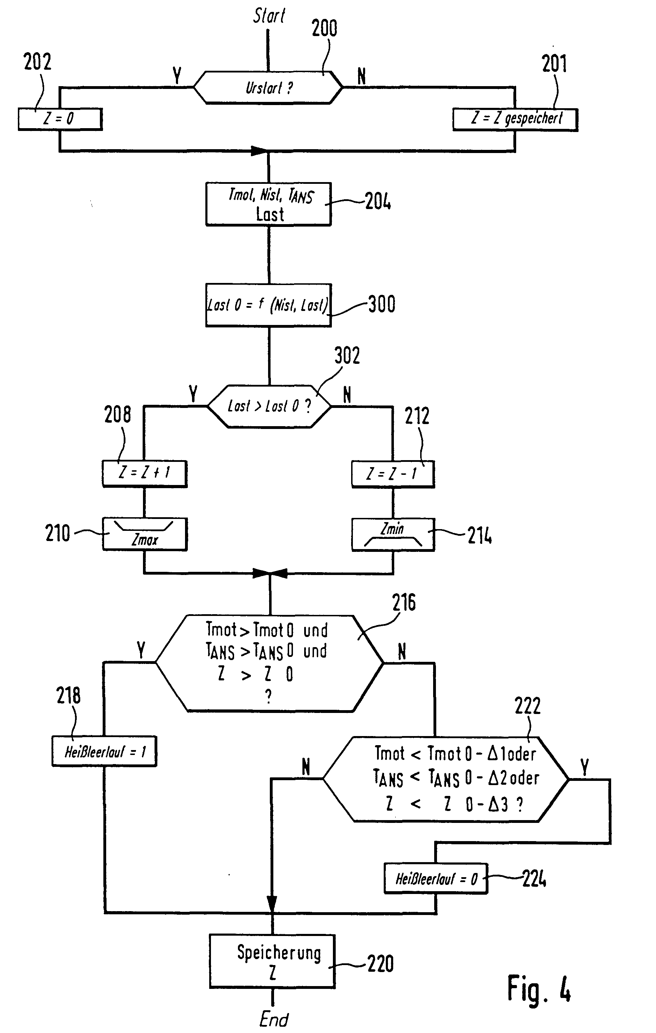

Das in Figur 3 dargestellte alternative Ausführungsbeispiel ist in Figur 4 als Flußdiagramm dargestellt. Dabei sind die bereits anhand von Figur 2 dargestellten Schritte mit den gleichen Bezugszeichen bezeichnet. Diese werden im folgenden nicht mehr beschrieben. Im Ausführungsbeispiel nach Figur 3 ist der Schritt 206 sowie die Schritte 230 bis 234 dadurch ersetzt, daß nicht einzelne Grenzwerte überprüft werden, sondern daß eine Grenzkennlinie vorgesehen ist, deren Über- bzw. Unterschreiten zur Inkrementiertung und Dekrementierung des Zählmittels 64 führt. Dazu wird nach Schritt 204 in einem Schritt 300 aufgrund der gemessenen Größen Drehzahl NIst und Last LAST aus der vorgegebenen Kennlinie ein Lastgrenzwert LAStO ausgelesen und im darauffolgenden Abfrageschritt 302 dieser aus der Kennlinie ausgelesene Lastgrenzwert mit der Lastmeßgröße LAST verglichen. Überschreitet die Lastmeßgröße diesen Grenzwert, wird gemäß Schritt 208 der Zähler inkrementiert, unterschreitet die Lastmeßgröße den Lastgrenzwert, so wird gemäß Schritt 212 der Zähler dekrementiert. Anstelle des Vergleichs auf der Basis der Lastwerte im Schritt 302 kann in einem anderen vorteilhaften Ausführungsbeispiel auch der Vergleich auf der Basis der Drehzahlwerte vorgenommen werden, wobei dann im Schritt 300 auf der Basis von Istdrehzahl und Lastmeßgröße ein Drehzahlgrenzwert N0 ausgelesen wird, der dem Vergleich in Schritt 302 zugrundeglegt wird. Überschreitet die Istdrehzahl diesen Grenzwert, wird der Zähler inkrementiert, unterschreitet sie den Grenzwert, wird er dekrementiert.

Auch in diesem Ausführungsbeispiel wird der Heißleerlauf dann erkannt, wenn die Motortemperatur, die Ansauglufttemperatur und eine von Motordrehzahl und Last abhängige Zeitdauer vorbestimmte Grenzwerte überschreiten.

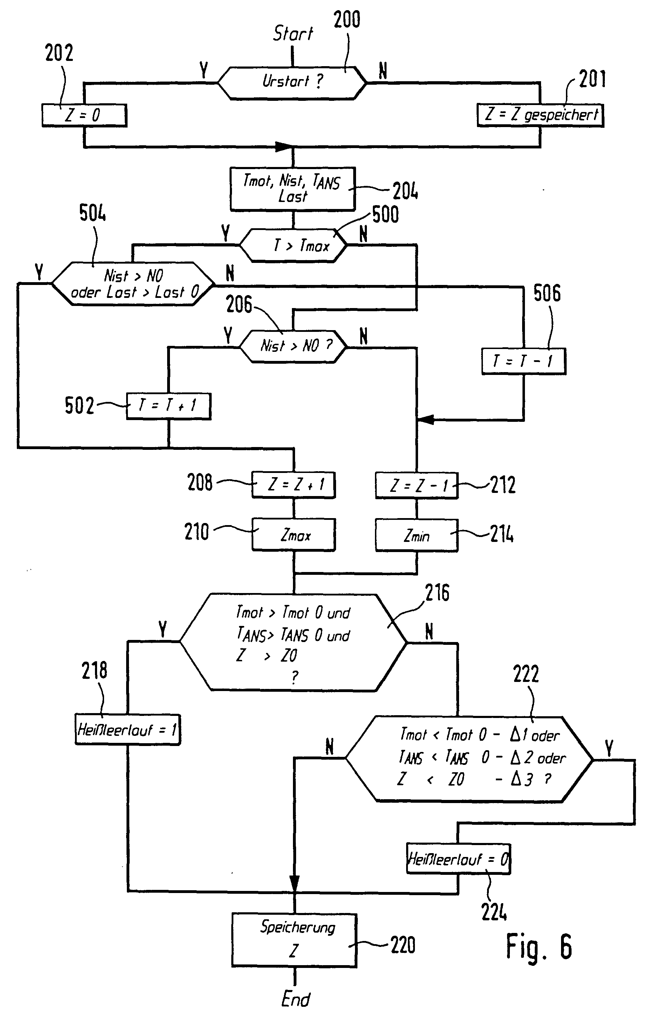

Figur 5 und 6 zeigen ein weiteres vorteilhaftes Ausführungsbeispiel der erfindungsgemäßen Vorgehensweise. Figur 5 zeigt ein Übersichtblockschaltbild eine alternativen Ausgestaltung des in Figur 1 dargestellten strichliert umrandeten Teils. Es ist ein weiteres Zählmittel 400 vorgesehen, dem eine von der Leitung 132 ausgehende Leitung 402 sowie eine von der Leitung 66 ausgehende Leitung 404 zugeführt wird. Die Ausgangsleitung 406 des Zählmittels 400 führt auf eine Schwellwertstufe 408, deren Ausgangsleitung 410 ein erstes Schaltmittel 412 und ein zweites Schaltmittel 414 betätigt. Das erste Schaltmittel 412 ist dabei in die Leitung 128, Ausgangsleitung der Schwellwertstufe 124 eingefügt, welche auf ein ODER-Gatter 416 geführt ist. Dem ODER-Gatter 416 wird ferner die Leitung 132 zugeführt, seine Ausgangsleitung stellt die Leitung 60 dar. Das zweite Schaltmittel 414 ist in die Leitung 134, Ausgangsleitung der Schwellwertstufe 126 eingefügt, die auf ein UND-Gatter 418 führt. Diesem wird als zweite Eingangsleitung die Leitung 138 zugeführt, seine Ausgangsleitung ist die Leitung 66.

Die dargestellten zusätzlichen Elemente berücksichtigen den Einfluß der Motorlast auf die Öltemperatur bzw. den Öldruck unabhängig von der Motordrehzahl, wenn diese eine vorbestimmte Zeit über der Grenzdrehzahl gelegen hat. Eine Inkrementierung des Zahlmittels 64 wird dann bei Überschreiten der Lastschwelle vorgenommen (ODER-Gatter 416). Ein Dekrementieren des Zählers wird erst dann durchgeführt, wenn beide Schwellen unterschritten werden (UND-Gatter 418). Überschreitet die Motordrehzahl den im Element 56 vorgegebenen Schwellwert, so wird einerseits das Zählmittel 64, andererseits das Zählmittel 400 inkrementiert. Erreicht der Zählwert des Zählmittels 400 den in der Schwellwertstufe 408 vorgegebenen Grenzwert, so werden durch Erzeugen eines entsprechenden Signals auf der Leitung 410 die Schaltelemente 412 und 414 geschlossen und er Lasteinfluß berücksichtigt. Dadurch führt ein Überschreiten der Lastschwelle durch den Lastmeßwert in der Schwellwertstufe 124 zur Inkrementierung des Zählmittels 64 unabhängig vom Drehzahlverhalten. Unterschreitet der Lastmeßwert den in der Schwellwertstufe 126 vorgegebenen Grenzwert, so wird dieser dem UND-Gatter 418 zugeführt. Unterschreitet gleichzeitig die Motordrehzahl den im Element 58 vorgegebenen Schwellwert, wird auf der Leitung 66 ein entsprechendes Signal zugeführt, welches zum Dekrementieren des Zählers 400 und zur Dekrementierung des Zählmittels 64 führt. Dabei ist der Schwellwert für das Zählmittel 400 kleiner als der für das Zählmittel 64.

Eine entsprechende Realisierung als Rechnerprogramm ist in Figur 6 dargestellt. Nach Schritt 204 wird im Schritt 500 abgefragt, ob der zweite Zähler T seinen Maximalwert Tmax erreicht hat. Ist dies nicht der Fall, wird gemäß Schritt 206 die Ist-Motordrehzahl mit dem vorgegebenen Schwellwert N0 verglichen, und bei Unterschreiten der Zähler 64 gemäß Schritt 212 dekrementiert. Überschreitet die Istdrehzahl den Schwellwert N0, so wird gemäß Schritt 502 der Zähler T inkrementiert und im darauffolgenden Schritt 208 der Zähler 64 inkrementiert. Hat gemäß Schritt 500 der Zählerwert T seinen Maximalwert erreicht, wird im Schritt 504 abgefragt, ob die Motordrehzahl den Schwellwert N0 überschritten hat oder ob der Lastmeßwert den Schwellwert LAST0 überschritten hat. Ist dies der Fall, wird gemäß Schritt 208 der Zähler Z inkrementiert, ist die Antwort negativ, das heißt sind beide Bedingungen nicht erfüllt, wird der Zähler T im Schritt 506 dekrementiert, und der Zähler Z gemäß Schritt 212 dekrementiert. Der weitere Funktionsablauf ist, wie anhand Figur 2, beschrieben.

Es wird also in diesem Ausführungsbeispiel eine Lösung beschrieben, bei welcher für den Fall, daß die Motordrehzahl für eine vorbestimmte Zeit die Grenzdrehzahl überschritten hat, zusätzlich der Lasteinfluß berücksichtigt wird und zwar dadurch, daß unabhängig vom Überschreiten der Drehzahlschwelle das Überschreiten der Lastschwelle zum Inkrementieren des Zählers Z führt. Ein Dekrementieren des Zählers kann erst dann erfolgen, wenn sowohl die Drehzahl der Schwelle als auch die Lastschwelle unterschritten ist.

Es ist jeweils vorteilhaft, den Leerlaufdrehzahlsollwert NSoll nach dem Verlassen des Betriebszustandes Heißleerlauf erst im nächsten Leerlaufzyklus einzustellen, so daß der Fahrer in einem Leerlaufzyklus keine Drehzahländerung bemerkt.

Ferner ist jeweils vorteilhaft, die Inkrementier- und die Dekrementiergeschwindigkeit des Zählmittels 24 unabhängig voneinander festzulegen, wobei in einer bevorzugten Realisierungsform beispielsweise die Dekrementiergeschwindigkeit größer als die Inkrementiergeschwindigkeit ist.

Ferner ist in einem vorteilhaften Ausführungsbeispiel vorgesehen, eine Hysterese zwischen Inkrementieren und Dekrementieren des Zählmittels einzuführen. Dazu werden die Grenzwerte für die Drehzahl und die Last bzw. die Grenzkennlinie für das Überschreiten und das Unterschreiten auf unterschiedliche Werte festgelegt. Dadurch wird ein häufiges Hin- und Herschalten zwischen Inkrementieren und Dekrementieren vermieden. In der Regel wird der Grenzwert für das Überschreiten betragsmäßig größer gewählt als der Grenzwert für das Unterschreiten.

Ferner kann in einem vorteilhaften Ausführungsbeispiel auf die Berücksichtigung von Motortemperatur und/oder Ansauglufttemperatur verzichtet werden.

## Patentansprüche

1. Verfahren zur Leerlaufeinstellung einer Brennkraftmaschine, wobei bei heißer Brennkraftmaschine die Leerlaufdrehzahl erhöht wird, **dadurch gekennzeichnet, daß** der Betriebszustand der heißen Brennkraftmaschine wenigstens abhängig vom Motordrehzahl und Motorlast ermittelt wird.

2. Verfahren nach Anspruch 1, **dadurch gekennzeichnet, daß** der Betriebszustand festgestellt wird, wenn eine Öltemperaturschwelle, bei der der Öldruck abzusinken droht, überschritten wird.

3. Verfahren nach Anspruch 1 oder 2, **dadurch gekennzeichnet, daß** ein Überschreiten einer Öltemperaturschwelle ermittelt wird wenigstens abhängig von Motordrehzahl und Last der Brennkraftmaschine, gegebenenfalls abhängig von Motortemperatur und/oder Ansauglufttemperatur.

4. Verfahren nach einem der vorhergehenden Ansprüche, **dadurch gekennzeichnet, daß** ein Überschreiten angenommen wird, wenn die Motortemperatur, ggf. die Ansauglufttemperatur und die Zeitdauer, für die der Motor mit einer Motordrehzahl oberhalb einer Grenzdrehzahl oder in einem Lastzustand oberhalb einer Lastgrenze betrieben wurde, vorbestimmte Grenzwerte überschreiten.

5. Verfahren nach Anspruch 4, **dadurch gekennzeichnet, daß** zur Ermittlung der Zeitdauer ein Zählwert abhängig von Drehzahl oder Last inkrementiert, bzw. dekrementiert wird.

6. Verfahren nach Anspruch 5, **dadurch gekennzeichnet, daß** die Inkrementier und die Dekrementiergeschwindigkeit des Zählmittels zur Bestimmung der Zeitdauer unabhängig voneinander festlegbar sind.

7. Verfahren nach Anspruch 5, **dadurch gekennzeichnet, daß** einen Hysterese zwischen Inkrementieren und Dekrementieren des Zählmittels vorgesehen sind.

8. Verfahren nach Anspruch 1, **dadurch gekennzeichnet, daß** er Betriebszustand dann als erreicht angenommen wird, wenn eine Zeitdauer, für die der Motor oberhalb eines vorgegebenen Drehzahl-Last-Betriebszustandes betrieben wurde und ggf. die Motortemperatur bzw. die Ansauglufttemperatur vorbestimmte Grenzwerte überschreiten.

9. Verfahren nach Anspruch 1, **dadurch gekennzeichnet, daß** der Lasteinfluß auf die Öltemperatur erst dann berücksichtigt wird, wenn die Motordrehzahl eine vorbestimmte Zeit lang die Grenzdrehzahl überschritten hat.

10. Verfahren nach Anspruch 9, **dadurch gekennzeichnet, daß** ein Zählwert bei Überschreiten der Lastschwelle unabhängig vom Überschreiten der Drehzahlgrenze inkrementiert wird, jedoch erst dekrementiert wird, wenn beide Grenzwerte unterschritten sind.

11. Verfahren nach einem der vorhergehenden Ansprüche, **dadurch gekennzeichnet, daß** bei der Ermittlung der Zeitdauer die Zeitdauer abgezogen wird, für die sich die Drehzahl unterhalb der Grenzdrehzahl befindet oder der Lastzustand der Brennkraftmaschine unterhalb der Lastschwelle sich befindet bzw. der Betriebpunkt unterhalb der Grenzkennlinie sich befindet.

12. Vorrichtung zur Leerlaufeinstellung einer Brennkraftmaschine, mit einer Steuereinheit, welche bei heißer Brennkraftmaschine die Leerlaufdrehzahl erhöht, **dadurch gekennzeichnet, daß** Mittel vorgesehen sind, welche den Betriebszustand mit heißer Brennkraftmaschine wenigstens abhängig von Motordrehzahl und Motorlast ermitteln.

## Claims

1. Method for adjusting the idling speed of an internal combustion engine, the idling speed being increased when the internal combustion engine is hot, **characterized in that** the operating state of the hot internal combustion engine is determined at least as a function of the rotational speed of the engine and the engine load.

2. Method according to Claim 1, **characterized in that** the operating state is detected if an oil temperature threshold in which the oil pressure threatens to drop is exceeded.

3. Method according to Claim 1 or 2, **characterized in that** an upward transgression of an oil temperature threshold is determined at least as a function of the rotational speed of the engine and load of the internal combustion engine, if appropriate as a function of the engine temperature and/or intake air temperature.

4. Method according to one of the preceding claims, **characterized in that** an upward transgression is accepted if the engine temperature, if appropriate the intake air temperature and the time period for which the engine has been operated with a rotational speed of the engine above a limiting rotational speed or in a load state above a load limit, exceed predetermined limiting values.

5. Method according to Claim 4, **characterized in that** in order to determine the time period, a counting value is incremented or decremented as a function of the rotational speed or load.

6. Method according to Claim 5, **characterized in that** the incrementing speed and the decrementing speed of the counting means for determining the time period can be set independently of one another.

7. Method according to Claim 5, **characterized in that** a hysteresis is provided between the incrementing and decrementing of the counting means.

8. Method according to Claim 1, **characterized in that** the operating state is assumed to have been obtained if a time period for which the engine has been operated above a predefined rotational speed/load operating state, and if appropriate the engine temperature or the intake air temperature, exceed predetermined limiting values.

9. Method according to Claim 1, **characterized in that** the influence of the load on the oil temperature is taken into account only if the rotational speed of the engine has exceeded the limiting rotational speed for a predetermined time.

10. Method according to Claim 9, **characterized in that**, when the load threshold is exceeded, a counting value is incremented independently of the upward transgression of the rotational speed limit, but is decremented only if both limiting values are downwardly transgressed.

11. Method according to one of the preceding claims, **characterized in that**, during the determination of the time period, the time period for which the rotational speed is below the limiting rotational speed, or for which the load state of the internal combustion engine is below the load threshold or for which the operating point is below the limiting characteristic curve, is subtracted.

12. Device for adjusting the idling speed of an internal combustion engine, having a control unit which increases the idling speed when the internal combustion engine is hot, **characterized in that** means are provided which determine the operating state with the internal combustion engine hot, at least as a function of the rotational speed of the engine and the engine load.

## Revendications

1. Procédé de réglage du ralenti d'un moteur thermique selon lequel on augmente le régime du ralenti lorsque le moteur thermique est chaud,
**caractérisé en ce qu'**
on détermine l'état de fonctionnement du moteur thermique chaud au moins en fonction du régime du moteur et de sa charge.

2. Procédé selon la revendication 1,
**caractérisé en ce qu'**
on détermine l'état de fonctionnement lorsqu'on dépasse un seuil de température d'huile pour lequel la pression d'huile menace de chuter.

3. Procédé selon la revendication 1 ou 2,
**caractérisé en ce qu'**
on détermine un dépassement d'un seuil de température d'huile au moins en fonction du régime du moteur et de sa charge, le cas échéant en fonction de la température du moteur et/ou de la température de l'air aspiré.

4. Procédé selon l'une des revendications précédentes,
**caractérisé en ce qu'**
on suppose que l'on a un dépassement si la température du moteur, le cas échéant la température de l'air aspiré et la durée pendant laquelle on a dépassé la valeur limite prédéterminée, le moteur ayant fonctionné avec un régime supérieur à un régime limite ou dans un état de charge supérieur à une charge limite.

5. Procédé selon la revendication 4,
**caractérisé en ce que**
pour déterminer la durée, on incrémente ou on décrémente un état de comptage en fonction du régime ou de la charge.

6. Procédé selon la revendication 5,
**caractérisé en ce qu'**
on fixe indépendamment l'une de l'autre la vitesse d'incrémentation et la vitesse de décrémentation du moyen de comptage pour déterminer la durée.

7. Procédé selon la revendication 5,
**caractérisé par**
une hystérésis entre l'incrémentation et la décrémentation du moyen de comptage.

8. Procédé selon la revendication 1,
**caractérisé en ce qu'**
on suppose avoir atteint l'état de fonctionnement si une durée pendant laquelle le moteur a fonctionné au-dessus d'un régime prédéterminé - état de charge et le cas échéant la température du moteur ou la température de l'air aspiré ont dépassé des valeurs limites prédéfinies.

9. Procédé selon la revendication 1,
**caractérisé en ce qu'**
on tient compte de l'influence de la charge sur la température de l'huile seulement si le régime du moteur a dépassé le régime limite pendant une durée prédéterminée.

10. Procédé selon la revendication 9,
**caractérisé en ce qu'**
on incrémente un état de comptage lors du dépassement vers le haut du seuil de charge indépendamment du dépassement du régime limite, mais on décrémente seulement lorsque les deux valeurs limites sont dépassées vers le bas.

11. Procédé selon l'une des revendications précédentes,
**caractérisé en ce que**
lorsqu'on détermine la durée, on retranche la durée pendant laquelle le régime est en dessous du régime limite ou l'état de charge du moteur thermique en dessous du seuil de charge où le point de fonctionnement se trouve en dessous de la caractéristique limite.

12. Dispositif pour régler le ralenti d'un moteur thermique comprenant une unité de commande qui augmente le régime de ralenti lorsque le moteur thermique est chaud,
**caractérisé par**
des moyens qui déterminent l'état de fonctionnement du moteur thermique chaud, au moins selon le régime et la charge du moteur.
